# EUROPEAN PATENT APPLICATION

(11) **EP 4 756 063 A1**
(43) Date of publication of application: **10.06.2026**
(21) Application number: 25201048.3
(22) Date of filing: 09.09.2025
(51) Int. Cl.: C22F 1/18, B21J 1/06, B21J 3/00, B21J 5/00, B21J 5/02, B21K 1/36, B21K 29/00

(54) **ISOTHERMAL NEAR-NET FORMING METHOD FOR TC4 TITANIUM ALLOY AEROENGINE INTEGRAL BLADED DISC**

(30) Priority: 06.12.2024 CN 202411783664
(71) Applicant: Baowu Special Metallurgy Co., Ltd., Shanghai 200940 (CN); Shanghai Jiao Tong University, Shanghai 200240 (CN)
(72) Inventor: CHU, Shuangjie, Shanghai, 201900 (CN); MENG, Qingtong, Shanghai, 200940 (CN); HUANG, Weiwei, Shanghai, 200240 (CN); ZHOU, Xiangyu, Shanghai, 200940 (CN); LIANG, Gaofei, Shanghai, 200940 (CN); LI, Zhe, Shanghai, 200940 (CN); MAO, Bo, Shanghai, 200240 (CN)
(74) Representative: Porta & Consulenti Associati S.p.A.

(57) **Abstract**

Disclosed is an isothermal near-net forming method for a TC4 titanium alloy aeroengine integral bladed disc, including: coating a TC4 titanium alloy bar with a glass lubricant, and heating to T_{β}-(30-80) °C; coating a pre-forging die with the glass lubricant and heating to T_{β}-(30-80) °C, and maintaining; loading into the pre-forging die, and pre-forging through at least one isothermal forging, followed by water-cooling to room temperature, a strain rate being ≤ 0.01 s⁻¹, and a deformation being 60-70%; heating to T_{β}-(30-80) °C; coating a final-forging forming die with the glass lubricant and heating to T_{β}-(30-80) °C, and maintaining; loading into the final-forging forming die, press-forming through at least one isothermal forging, followed by water-cooling to room temperature, a strain rate being ≤ 0.005 s⁻¹, a deformation being 60-70%; performing a solid solution treatment, and water-cooling to room temperature; and 8) performing an aging treatment, and air-cooling to room temperature.

## Description

### TECHNICAL FIELD

The present disclosure belongs to the field of titanium alloy manufacturing, and in particular relates to an isothermal near-net forming method for a TC4 titanium alloy aeroengine integral bladed disc.

### BACKGROUND

The fan disc and compressor disc of aeroengine adopt a combination of wheel disc + blades. The outer side of the wheel disc is provided with mortises, roots of the blades each are provided with tenons, and the tenons are embedded in mortises to make up the fan disc. With the development of forging technology and machining technology, an integral bladed disc is widely used as one of the landmark technologies of the fourth generation aeroengine. This structure eliminates connections between tenons and mortises, which prevents gas escape and friction and wear between tenons and mortises, and has the advantages of reduced weight and improved air intake efficiency.

TC4 titanium alloy is a Ti-AI-V series α-β titanium alloy successfully developed by the United States in 1954. It has moderate room-temperature and high-temperature strength, good creep resistance and thermal stability, greater fatigue resistance and crack propagation resistance, and good fracture toughness and hot-salt stress corrosion resistance. It is mainly used for fans, compressor discs and blades of aeroengines, various beams, bulkheads, sliding rails, and landing gear beams in aircraft structures, shells and pressure vessels of space rockets, and various types of fasteners. It is suitable for manufacturing parts designed according to the principle of damage tolerance. In the aerospace industry, TC4 alloy semi-finished products account for more than 80% of the total output of various titanium alloy semi-finished products.

Difficulties of the TC4 titanium alloy integral bladed disc lie in that: the integral bladed disc is composed of two parts, namely the disc body and blades; in addition to conventional requirements of strength and plasticity, the disc body is mainly assessed with the properties such as low cycle fatigue and fracture toughness, while the blades are mainly assessed with the properties such as high cycle fatigue and creep, which causes contradictory structure requirements in consideration of performance requirements of the disc body and the blades. Therefore, deformation and temperature during forging are needed to be strictly controlled to obtain the required structure and performance.

CN115502314A discloses a preparation process of a large-size fine-grained integral bladed disc of TC4 titanium alloy with high uniformity, which includes the following steps: performing cogging and forging on an alloy ingot at 1050-1150 °C, then upsetting and deforming the obtained blank through one forging at 1015-1035 °C, water-cooling after forging, heating the blank to 880-910 °C, maintaining at the temperature for 12-20 h, and then heating the blank in the furnace to 940-980 °C and forging, then upsetting and deforming the blank at 935-985 °C through 6-8 heating-upsetting-drawing cycles, and forming the blank at 945-965 °C to obtain a forged blank; finally, annealing the resulting forged blank to obtain a final integral bladed disc forging blank. This process is suitable for preparing an integral bladed disc forging with a dimension of 600-1500 mm and a height of 60-150 mm, and the homogeneity of structure and properties of the forging are better than those of the traditional process. Any part of the forging exhibits a room-temperature tensile strength ≥ 950 MPa, a room-temperature yield strength ≥ 850 MPa, an elongation rate ≥ 15.0%, and a section shrinkage ≥ 25%. The 400 °C tensile strength thereof is ≥ 650 MPa, an elongation rate thereof is ≥ 20%, and a section shrinkage thereof is ≥ 40%. After thermal exposure to 400 °C for 100 h, the elongation rate of the sample is ≥ 10.0% and the section shrinkage thereof is ≥ 20%.

However, the poor hardenability of TC4 alloy and the increasing size of the integral bladed disc have become the main contradiction at present. Due to the super-large torsion angle of the integral bladed disc of the fan, the maximum height of its parts has been increased to 200 mm or more at present. It is difficult to obtain a TC4 titanium alloy integral bladed disc with uniform structure and properties between different parts by traditional forging and heat treatment processes, so a near-net forming process is required to deal with the above problems.

### SUMMARY

An object of the present disclosure is to provide an isothermal near-net forming method for a TC4 titanium alloy aeroengine integral bladed disc, to integrally forge to form a large-size TC4 titanium alloy integral bladed disc, having a diameter of 800-1500 mm and a thickness of 200-350 mm. The method solves the technical problem that the difficulty of controlling the uniformity of structures and properties of forgings is doubled due to the increase of size, which easily leads to the decrease of strength and coarse structure of forgings, thereby failing to meet use requirements. The TC4 titanium alloy aeroengine integral bladed disc at any part exhibits room-temperature tensile properties of: a tensile strength ≥ 960 MPa, a yield strength ≥ 880 MPa, an elongation rate ≥ 12.0%, and a section shrinkage ≥ 25%; and the TC4 titanium alloy aeroengine integral bladed disc at any part exhibits high-temperature tensile properties at 400 °C of: a tensile strength ≥ 650 MPa, an elongation rate ≥ 15%, and a section shrinkage ≥ 50%; the TC4 titanium alloy aeroengine integral bladed disc exhibits a room-temperature impact work ≥ 28 J, and a Brinell hardness presented by an indentation diameter ≥ 3.35 mm.

In order to achieve the above object, the present disclosure provides the following technical solutions:
Provided is an isothermal near-net forming method for a TC4 titanium alloy aeroengine integral bladed disc, including:
1) coating a surface of a TC4 titanium alloy bar with a glass lubricant, and heating a coated TC4 titanium alloy bar to a temperature of T_{β}-(30-80) °C within a heating time T1, wherein T1= D×(0.6-0.9), T1 is in a unit of minute; and D represents a diameter of the TC4 titanium alloy bar and is in a unit of mm;
2) coating a pre-forging die with a layer of the glass lubricant and heating to a temperature of T_{β}-(30-80) °C, and maintaining at the temperature;
3) loading a resulting TC4 titanium alloy bar obtained in step 1) into a resulting pre-forging die obtained in step 2), and pre-forging into a TC4 titanium alloy intermediate blank of a required shape through at least one isothermal forging by using a hydraulic press, and water-cooling the TC4 titanium alloy intermediate blank after pre-forging to room temperature, wherein a strain rate for each isothermal forging is ≤ 0.01 s⁻¹, and a deformation for each isothermal forging is controlled at 60-70%;
4) heating a resulting TC4 titanium alloy intermediate blank obtained in step 3) to a temperature of T_{β}-(30-80) °C within a heating time T2, wherein T2 = H×(0.6-0.9), T2 is in a unit of minute; H represents a thickness of the TC4 titanium alloy intermediate blank and is in a unit of mm;
5) coating a final-forging forming die with the glass lubricant and heating to a temperature of T_{β}-(30-80) °C, and maintaining at the temperature;
6) loading a resulting TC4 titanium alloy intermediate blank obtained in step 4) into a resulting final-forging forming die obtained in step 5), press-forming the TC4 titanium alloy intermediate blank into a TC4 titanium alloy integral bladed disc forging through at least one isothermal forging by using a hydraulic press, and water-cooling the TC4 titanium alloy integral bladed disc forging after forging to room temperature, wherein a strain rate for each isothermal forging is ≤ 0.005 s⁻¹, and a deformation for each isothermal forging is controlled at 60-70%;
7) subjecting a resulting TC4 titanium alloy integral bladed disc forging obtained in step 6) to a solid solution treatment at a temperature of T_{β}-(30-80) °C for 1-2 hours, and then water-cooling to room temperature; and
8) subjecting an obtained TC4 titanium alloy integral bladed disc forging obtained in step 7) to an aging treatment, and air-cooling to room temperature.

In an aspect, provided is an isothermal near-net forming method for a TC4 titanium alloy aeroengine integral bladed disc, including or consisting of:
1) coating a surface of a TC4 titanium alloy bar with a glass lubricant, and heating a coated TC4 titanium alloy bar to a temperature of T_{β}-(30-80) °C within a heating time T1, wherein T1= D×(0.6-0.9), T1 is in a unit of minute; and D represents a diameter of the TC4 titanium alloy bar and is in a unit of mm, T_{β} represents a transformation temperature from β phase to α phase of the TC4 titanium alloy bar;
2) coating a pre-forging die with a layer of the glass lubricant and heating to a temperature of T_{β}-(30-80) °C, and maintaining at the temperature;
3) loading a resulting TC4 titanium alloy bar obtained in step 1) into a resulting pre-forging die obtained in step 2), and pre-forging into a TC4 titanium alloy intermediate blank of a required shape through one isothermal forging by using a hydraulic press, and water-cooling the TC4 titanium alloy intermediate blank after pre-forging to room temperature at a cooling rate of 5-8 °C/min, wherein a strain rate for each isothermal forging is ≤ 0.01 s⁻¹, and a deformation for each isothermal forging is controlled at 60-70%;
4) heating a resulting TC4 titanium alloy intermediate blank obtained in step 3) to a temperature of T_{β}-(30-80) °C within a heating time T2, wherein T2 = H×(0.6-0.9), T2 is in a unit of minute; H represents a thickness of the TC4 titanium alloy intermediate blank and is in a unit of mm;
5) coating a final-forging forming die with the glass lubricant and heating to a temperature of T_{β}-(30-80) °C, and maintaining at the temperature;
6) loading a resulting TC4 titanium alloy intermediate blank obtained in step 4) into a resulting final-forging forming die obtained in step 5), press-forming the resulting TC4 titanium alloy intermediate blank obtained in step 4) into a TC4 titanium alloy integral bladed disc forging through one isothermal forging by using a hydraulic press, and water-cooling the TC4 titanium alloy integral bladed disc forging after forging to room temperature at a cooling rate of 5-8 °C/min, wherein a strain rate for each isothermal forging is ≤ 0.005 s⁻¹, and a deformation for each isothermal forging is controlled at 60-70%;
7) subjecting a resulting TC4 titanium alloy integral bladed disc forging obtained in step 6) to a solid solution treatment at a temperature of T_{β}-(30-80) °C for 1-2 hours, and then water-cooling to room temperature at a cooling rate of 5-8 °C/min; and
8) subjecting a resulting TC4 titanium alloy integral bladed disc forging obtained in step 7) to an aging treatment, and air-cooling to room temperature.

In an aspect, provided is an isothermal near-net forming method for a TC4 titanium alloy aeroengine integral bladed disc, including:
1) coating a surface of a TC4 titanium alloy bar with a glass lubricant, and heating a coated TC4 titanium alloy bar to a temperature of T_{β}-(30-80) °C within a heating time T1, wherein T1= D×(0.6-0.9), T1 is in a unit of minute; and D represents a diameter of the TC4 titanium alloy bar and is in a unit of mm;
2) coating a pre-forging die with a layer of the glass lubricant and heating to a temperature of T_{β}-(30-80) °C, and maintaining at the temperature;
3) loading a resulting TC4 titanium alloy bar into a resulting pre-forging die, and forging into a TC4 titanium alloy intermediate blank of a required shape through one isothermal forging by using a hydraulic press, and water-cooling the TC4 titanium alloy intermediate blank after forging to room temperature at a cooling rate of 5-8 °C/min, wherein a strain rate for each isothermal forging is ≤ 0.01 s⁻¹, and a deformation for each isothermal forging is controlled at 60-70%;
4) heating a resulting TC4 titanium alloy intermediate blank to a temperature of T_{β}-(30-80) °C within a heating time T2, wherein T2 = H×(0.6-0.9), T2 is in a unit of minute; H represents a thickness of the TC4 titanium alloy intermediate blank and is in a unit of mm;
5) coating a final-forging forming die with the glass lubricant and heating to a temperature of T_{β}-(30-80) °C, and maintaining at the temperature;
6) loading a resulting TC4 titanium alloy intermediate blank into a resulting final-forging forming die, press-forming the resulting TC4 titanium alloy intermediate blank into a TC4 titanium alloy integral bladed disc forging through one isothermal forging by using a hydraulic press, and water-cooling the TC4 titanium alloy integral bladed disc forging after forging to room temperature at a cooling rate of 5-8 °C/min, wherein a strain rate for each isothermal forging is ≤ 0.005 s⁻¹, and a deformation for each isothermal forging is controlled at 60-70%;
7) subjecting a resulting TC4 titanium alloy integral bladed disc forging to a solid solution treatment at a temperature of T_{β}-(30-80) °C for 1-2 hours, and then water-cooling to room temperature at a cooling rate of 5-8 °C/min; and
8) subjecting an obtained TC4 titanium alloy integral bladed disc forging to an aging treatment, and air-cooling to room temperature.

In some embodiments, the method further includes: after step 8), a step 9): subjecting a resulting TC4 titanium alloy integral bladed disc forging to finishing, wherein a unilateral machining allowance from the TC4 titanium alloy integral bladed disc forging to a rough-machined blank is in a range of 3-4 mm.

In some embodiments, in step 3), the resulting TC4 titanium alloy bar after heating is loaded into the resulting pre-forging die within 30 seconds.

In some embodiments, in step 3), the TC4 titanium alloy intermediate blank is water-cooled within 30 seconds after pre-forging, at a cooling rate ≥ 5 °C/min.

In some embodiments, in step 6), the resulting TC4 titanium alloy intermediate blank after heating is loaded into the resulting final-forging forming die within 30 seconds.

In some embodiments, in step 6), the TC4 titanium alloy integral bladed disc forging is water-cooled within 30 seconds after final-forging, at a cooling rate ≥ 5 °C/min.

In some embodiments, in step 7), the resulting TC4 titanium alloy integral bladed disc forging is water-cooled within 30 seconds after the solid solution treatment, at a cooling rate ≥ 5 °C/min.

In some embodiments, in step 8), the aging treatment is conducted at a temperature of 550-800 °C for 2-10 hours, and a resulting TC4 titanium alloy integral bladed disc forging after the aging treatment is then air-cooled to room temperature.

In the method of the present disclosure:
since the TC4 titanium alloy integral bladed disc forging of the present disclosure has a large size, the maximum thickness has exceeded the theoretical hardenability size of a TC4 titanium alloy material, and the cooling rate provided by air cooling is very slow, which is very unfavorable for the control of the uniformity of the structure and properties of the integral bladed disc. If it is water-cooled only after the solid solution heat treatment according to the conventional process, it is difficult to reduce the structure difference caused by slow cooling after forging.

In the method of the present disclosure, the water cooling process is implemented after the pre-forging, forming forging and solid solution heat treatment, so that the grain growth caused by slow cooling is avoided to a certain extent, and the uniformity of the structure is controlled and the difference is reduced in each water cooling process; in addition, martensite transformation occurs in high-temperature β phase during multi-pass rapid water-cooling, and the structure contains many dislocations and twin crystals, which has a serious pinning effect on slip, thus improving the strength and properties of the material.

According to the present disclosure, both the TC4 titanium alloy bar (intermediate blank) and the forging die are heated to a temperature 30-80 °C lower than T_{β} and maintained at the temperature. Because the deformation resistance of the material is negatively correlated with the temperature, the temperature drop does not occur during the long-term contact between the bar (intermediate blank) and the die, so the deformation resistance of the bar (intermediate blank) is very small and the plasticity is good, and the high plasticity at low strain rate is fully utilized to realize the large forming of a large-size integral bladed disc forging in each pass during forging. The deformation during each isothermal forging of the present disclosure is controlled at 60-70% because the existing experimental research results show that when the forging deformation is less than 20%, grains in the forging are very coarse; with the increase of deformation, the grain size gradually decreases; when the forging deformation is more than 85%, the grains grow again due to factors such as recrystallization. When the forging deformation is 60-70%, the anisotropy in the microstructure is the smallest, the grains are the smallest and uniform, and the comprehensive properties are the best.

In the present disclosure, a two-phase isothermal forging process is used to realize the precise forming of forgings, and the unilateral machining allowance of forgings is in a range of 3-4 mm. Compared with the very large machining allowance of conventional hot die forgings, the hardenability range of the core of a thick-section integral bladed disc forging is further improved, thereby improving the structure uniformity of the final-forging.

The TC4 titanium alloy aeroengine integral bladed disc prepared by the method of the present disclosure has a diameter of 800-1500 mm and a thickness of 200-350 mm; the TC4 titanium alloy aeroengine integral bladed disc at any part exhibits room-temperature tensile properties of: a tensile strength ≥ 960 MPa, a yield strength ≥ 880 MPa, an elongation rate ≥ 12.0%, and a section shrinkage ≥ 25%; and the TC4 titanium alloy aeroengine integral bladed disc at any part exhibits high-temperature tensile properties at 400 °C of: a tensile strength ≥ 650 MPa, an elongation rate ≥ 15%, and a section shrinkage ≥ 50%; the TC4 titanium alloy aeroengine integral bladed disc exhibits a room-temperature impact work ≥ 28 J, and a Brinell hardness presented by an indentation diameter ≥ 3.35 mm.

The TC4 titanium alloy aeroengine integral bladed disc of the present disclosure has a microstructure of an (α+β) two-phase zone structure, including mainly or being composed of β transformation structure matrix and an equiaxed primary α phase distributed thereon, where the equiaxed primary α phase has a content of 40-50% and a size ≤ 20 µm.

Compared with conventional technology, some embodiments of the present disclosure have the following beneficial effects.

Because the effective forging temperature range of the titanium alloy is very narrow (within a range of 100 °C) and the thermal conductivity is poor, the temperature of the die is lower than that of the blank in the existing conventional forging process, and the heat of the blank is quickly transferred to the die, resulting in obvious temperature drop on its surface, which leads to the continuous increase of deformation resistance and the continuous decrease of plasticity, and the final-forging has poor surface quality and uneven performance and structure. Therefore, the forgings produced by the existing conventional forging process have relatively large machining allowance and fast deformation rate.

According to the present disclosure, an isothermal forging process is adopted, and the strain rate in the forming forging process is strictly controlled (a very small strain rate is adopted, the pre-forging strain rate is ≤ 0.01 s⁻¹, and the final-forging strain rate is ≤ 0.005 s⁻¹), so that the die and the blank are always in the same high-temperature condition, and the dynamic recrystallization and dynamic recovery processes in the deformation process are close to equilibrium, so that the residual stress caused by forging deformation is obviously reduced, which is beneficial to improving the dimensional control accuracy in the subsequent processing process. In addition, a very small strain rate could achieve a single large deformation (the deformation is not less than 60%), which could fully crush the original grains and obtain uniform and fine intermediate blanks and forgings with bimodal structure, especially the equiaxed primary α phase size ≤ 20 µm, which is fully conducive to improving the strength and plasticity of the integral bladed disc.

The TC4 titanium alloy integral bladed disc forging of the present disclosure has a large size, and the thickness thereof reaches 200 mm or more, with a maximum value reaching 350 mm, which exceeds the theoretical hardenability size of the TC4 titanium alloy material. Therefore, according to the present disclosure, three water cooling processes following the pre-forging, forming forging and solid solution heat treatment are adopted, and rapid cooling is fully utilized to obtain unsaturated transformation structure and fine equiaxed primary α phase (the size of equiaxed primary α phase is ≤ 20 µm), thus providing a basis for final aging heat treatment. In addition, the structure of the blank grows when it is cooled from high temperature to room temperature. Compared with air-cooling, water-cooling could greatly improve the cooling rate of the blank core, shorten the cooling time, effectively reduce the structural difference between the surface and the core of the large-size blank (forging), and finally, an integral bladed disc forging with uniform structure, and high strength and plasticity and other properties is obtained.

### BRIEF DESCRIPTION OF THE DRAWINGS

FIG. 1 shows a microstructure photograph of the core of the forging in Example 1 of the present disclosure;
FIG. 2 shows a microstructure photograph of the forging near the surface in Example 1 of the present disclosure;
FIG. 3 shows a microstructure photograph of the core of the forging in Comparative Example 1 of the present disclosure; and
FIG. 4 shows a microstructure photograph of the forging near the surface in Comparative Example 1 of the present disclosure.

### DETAILED DESCRIPTION OF THE EMBODIMENTS

### Definition

In the disclosure, the expression "near-net forming method" refers to a precise forming process which ensures that the geometric dimension of a resulting formed part is very close to that of a final product, and requires only a minor subsequent processing (such as precision grinding and polishing) before direct use.

In the disclosure, the term "T_{β}" refers to a transformation temperature from β phase to α phase of an alloy.

In the disclosure, the expression "a temperature of T_{β}-(30-80) °C" means a temperature ranging from T_{β}-80 °C to T_{β}-30 °C.

Test results of examples below shown in Tables 3 and 4 were obtained by the performance test methods below.

Room-temperature tensile properties: determined according to GB/T 228.1-2021.

Elevated temperature tensile properties at 400 °C: determined according to GB/T228.2-2015, using a sample with a working diameter of 5 mm.

Room temperature impact work: determined according to GB/T229-2020.

Fracture toughness: determined according to GB/T4161-2007.

The present disclosure will be further described with reference to examples and accompanying drawings.

Provided is an isothermal near-net forming method for a TC4 titanium alloy aeroengine integral bladed disc, including:
1) coating a surface of a TC4 titanium alloy bar with a glass lubricant, and heating a coated TC4 titanium alloy bar to a temperature of T_{β}-(30-80) °C within a heating time T1, wherein T1= D×(0.6-0.9), T1 is in a unit of minute; and D represents a diameter of the TC4 titanium alloy bar and is in a unit of mm;
2) coating a pre-forging die with a layer of the glass lubricant and heating to a temperature of T_{β}-(30-80) °C, and maintaining at the temperature;
3) loading a resulting TC4 titanium alloy bar into a resulting pre-forging die, and pre-forging to a TC4 titanium alloy intermediate blank of a required shape through at least one isothermal forging by using a hydraulic press, and water-cooling the TC4 titanium alloy intermediate blank after pre-forging to room temperature, wherein a strain rate for each isothermal forging is ≤ 0.01 s⁻¹, and the deformation for each isothermal forging is controlled at 60-70%;
4) heating a resulting TC4 titanium alloy intermediate blank to a temperature of T_{β}-(30-80) °C within a heating time T2, wherein T2 = H×(0.6-0.9), T2 is in a unit of minute; H represents a thickness of the TC4 titanium alloy intermediate blank and is in a unit of mm;
5) coating a final-forging forming die with the glass lubricant and heating to a temperature of T_{β}-(30-80) °C, and maintaining at the temperature;
6) loading a resulting TC4 titanium alloy intermediate blank into a resulting final-forging forming die, press-forming the resulting TC4 titanium alloy intermediate blank into a TC4 titanium alloy integral bladed disc forging through at least one isothermal forging by using a hydraulic press, and water-cooling the TC4 titanium alloy integral bladed disc forging after forging to room temperature, wherein a strain rate for each isothermal forging is ≤ 0.005 s⁻¹, and a deformation for each isothermal forging is controlled at 60-70%;
7) subjecting a resulting TC4 titanium alloy integral bladed disc forging to a solid solution treatment at a temperature of T_{β}-(30-80) °C for 1-2 hours, and then water-cooling to room temperature; and
8) subjecting an obtained TC4 titanium alloy integral bladed disc forging to an aging treatment, and air-cooling to room temperature.

### Example 1

The aeroengine integral bladed disc had a forging weight of 560 kg, a diameter of 1000 mm, a thickness of 250 mm, and a β phase transition temperature of T_{β} = 1000 °C. The manufacturing method thereof was as follows:
1) A bar segment was cut off from a Φ400 mm TC4 titanium alloy bar, and coated with a glass lubricant, and the bar segment was heated to 950 °C within 300 min.
2) A pre-forging die for pre-forging was coated with the glass lubricant and heated to 950 °C, and then maintained at 950 °C in the production process.
3) The TC4 titanium alloy bar segment after heating and maintaining the temperature was loaded into the pre-forging die obtained in step 2) within 30 s, and then forged into an intermediate blank of a desired shape through one isothermal forging by using a hydraulic press, wherein the strain rate was 0.01 s⁻¹ and the deformation was 65%. The intermediate blank was cooled to room temperature by placing in water within 30 s after forging, with a cooling rate of 5 °C/min.
4) The obtained intermediate blank was heated to 950 °C within 300 min.
5) A final-forging forming die was coated with the glass lubricant and heated to 950 °C, and then maintained at 950 °C in the production process.
6) The TC4 titanium alloy intermediate blank after heating and maintaining the temperature was loaded into the final-forging forming die obtained in step 5) within 30 s; the TC4 titanium intermediate blank was press-formed into a final TC4 titanium alloy integral bladed disc forging through one isothermal forging by using the hydraulic press, wherein the strain rate was 0.005 s⁻¹ and the deformation was 65%. After forging, the TC4 titanium alloy integral bladed disc forging was taken out and placed into water within 30 s to cool to room temperature, with a cooling rate of 6 °C/min.
7) The obtained TC4 titanium alloy integral bladed disc forging was subjected to a solid solution treatment at 950 °C for 2 h; and after the solid solution treatment, it was taken out and put into water within 30 s to cool to room temperature, with a cooling rate of 5 °C/min.
8) The cooled TC4 titanium alloy integral bladed disc forging was subjected to an aging treatment at 720 °C, and after the treatment, it was air-cooled to room temperature.

### Comparative Example 1

The weight and size of the integral bladed disc, and T_{β} of the material thereof were completely the same as those in Example 1, and its manufacturing method was as follows:
1) A Φ400 mm TC4 titanium alloy bar was blanked into a bar segment and coated with a glass lubricant, and the bar segment was heated to 950 °C within 300 min.
2) A pre-forging die for pre-forging was coated with the glass lubricant and heated to 950 °C, and then maintained at 950 °C in the production process.
3) The TC4 titanium alloy bar segment after heating and maintaining the temperature was transferred and loaded into the pre-forging die obtained in step 2) within 30 s, and then forged into a TC4 titanium alloy intermediate blank of a desired shape through one isothermal forging by using a hydraulic press, wherein the strain rate was 0.01 s⁻¹ and the deformation was 65%. The intermediate blank was air-cooled to room temperature after forging.
4) The obtained TC4 titanium alloy intermediate blank was heated to 950 °C within 300 min.
5) A final-forging forming die was coated with the glass lubricant and heated to 950 °C, and then maintained at 950 °C in the production process.
6) The TC4 titanium alloy intermediate blank after heating and maintaining the temperature was transferred and loaded into the final-forging forming die obtained in step 5) within 30 s; the TC4 titanium alloy intermediate blank was press-formed into a final TC4 titanium alloy integral bladed disc forging through one isothermal forging by using the hydraulic press, wherein the strain rate was 0.005 s⁻¹ and the deformation was 65%. After forging, the TC4 titanium alloy intermediate blank was then air-cooled to room temperature.
7) The obtained TC4 titanium alloy integral bladed disc forging was subjected to a solid solution treatment at 950 °C for 2 h; and after the solid solution treatment, it was taken out and put into water within 30 s to cool to room temperature, at a cooling rate of 5 °C/min.
8) The cooled TC4 titanium alloy integral bladed disc forging was subjected to an aging treatment at 720 °C for 2 h, and after the treatment, it was air-cooled to room temperature.

### Comparative Example 2

The weight and size of the integral bladed disc, and T_{β} of the material thereof were completely the same as those in Example 1, and its manufacturing method was as follows:
1) A Φ400 mm TC4 titanium alloy bar was blanked into a bar segment and coated with a glass lubricant, and the bar segment was heated to 900 °C within 300 min.
2) A pre-forging die for pre-forging was coated with the glass lubricant and heated to 400 °C.
3) The TC4 titanium alloy bar segment after heating and maintaining the temperature was transferred and loaded into the pre-forging die obtained in step 2) within 30 s; and then forged into a TC4 titanium alloy intermediate blank of a desired shape through one isothermal forging by using a hydraulic press, wherein the strain rate was 0.1 s⁻¹ and the deformation was 65%. The TC4 titanium alloy intermediate blank was put into water within 30 s after forging and cooled to room temperature, with a cooling rate of 2 °C/min.
4) The obtained TC4 titanium alloy intermediate blank was heated to 900 °C within 300 min.
5) The final-forging forming die was coated with the glass lubricant and heated to 500 °C.
6) The TC4 titanium alloy intermediate blank after heating and maintaining the temperature was transferred and loaded into the final-forging forming die obtained in step 5) within 30 s; the TC4 titanium alloy intermediate blank was press-formed into a final TC4 titanium alloy integral bladed disc forging through one isothermal forging by using the hydraulic press, wherein the strain rate was 0.05 s⁻¹ and the deformation was 65%. The intermediate blank was put into water within 30 s after forging and cooled to room temperature, with a cooling rate of 2 °C/min.
7) The obtained TC4 titanium alloy integral bladed disc forging was subjected to a solid solution treatment at 900 °C for 2 h; and after the solid solution treatment, it was taken out and put into water within 30 s to cool to room temperature, with a cooling rate of 2 °C/min.
8) The cooled TC4 titanium alloy integral bladed disc forging was subjected to an aging treatment at 720 °C for 2 h, and after the aging treatment, it was air-cooled to room temperature.

The parameters of integral bladed disc forgings, preparation process parameters and finished product performance of other examples of the present disclosure are shown in Tables 1-4.

As can be seen from Tables 1-4, in Example 1, the pre-forging, forming forging and solid solution heat treatment are all followed by water cooling process. In Comparative Example 1, the weight and size of the integral bladed disc and T_{β} of the material thereof are completely the same as those in Example 1, but the cooling means after each forging is air cooling, and water cooling is implemented after the solid solution heat treatment. Due to the slow cooling rate of air cooling, the structure is coarse, the content of the primary α phase increases, and the strength decreases to some extent. Therefore, there are obvious differences between Example 1 and Comparative Example 1 in structure size, phase content and strength. In Comparative Example 2, the weight and size of the integral bladed disc and T_{β} of the material thereof are completely the same as those in Example 1, but the blank temperature, die temperature and strain rate of each forging deviate from the scope of the process of the present disclosure. Due to the low mold temperature and blank temperature and insufficient cooling rate, the content of the primary α phase is high, and the impact property is greatly reduced.

The properties and structure of the integral bladed disc forgings in Example 1 and Comparative Example 1 were compared and analyzed.

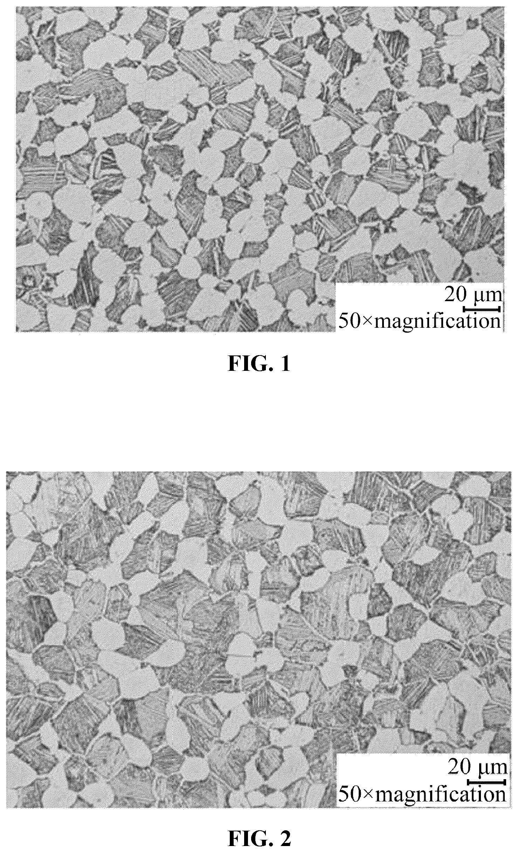

Referring to FIGs. 1 and 2, which show the microstructure of the forging in Example 1 of the present disclosure. As shown in the figures, it is a typical two-phase zone structure, the primary α phase content is in a range of 40-50%, and the α phase size is basically uniform and evenly distributed, with the size ≤ 20 µm, and the secondary α phase is fine and flaky with a certain aspect ratio; In combination with the mechanical properties in Table 1, all parts have high strength and plasticity and excellent comprehensive properties.

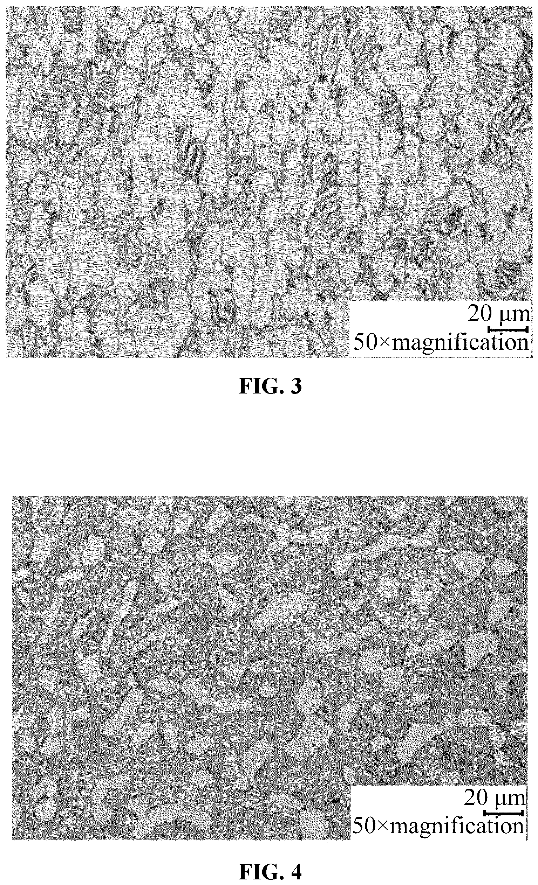

Referring to FIGs. 3 and 4, which show the microstructure of the forging in Comparative Example 1. In Comparative Example 1, the high magnification corresponds to a two-phase zone structure, and the content of the primary α phase is 30% on the surface and while 70% in the core. The content of the primary α phase in the core of the forging is obviously greater than that on the surface, and there are obvious differences in structure; in combination with the mechanical properties in Table 1, because air cooling is implemented after pre-forging and forming forging in Comparative Example 1, the structure was coarse due to slow cooling, resulting in that the overall strength fails to meet the requirements.

Finally, it should be noted that the above embodiments are only intended to illustrate the technical solutions of the present disclosure but not to limit the scope of the present disclosure. Although the present disclosure has been described in detail with reference to the preferred embodiments, those of ordinary skilled in the art should understand that modifications or equivalent substitutions may be made to the technical solutions of the present disclosure without departing from the essence and the scope of the technical solutions of the present disclosure.

**Table 1**

| | Weight of forging kg | Diameter of forging mm | Thickness of forging mm | β phase transition temperature T_{β} °C | Diameter of bar mm | Thickness of intermediate blank mm |
|---|---|---|---|---|---|---|
| Example 1 | 560 | 1000 | 250 | 1000 | 400 | 380 |
| Example 2 | 400 | 800 | 200 | 995 | 380 | 380 |
| Example 3 | 650 | 1100 | 300 | 1005 | 420 | 420 |
| Example 4 | 1000 | 1500 | 350 | 990 | 520 | 520 |
| Example 5 | 840 | 1300 | 310 | 997 | 500 | 450 |
| Comparative Example 1 | 560 | 1000 | 250 | 1000 | 400 | 380 |
| Comparative Example 2 | 560 | 1000 | 250 | 1000 | 400 | 380 |

**Table 2**

| | Example 1 | Example 2 | Example 3 | Example 4 | Example 5 | Comparative Example 1 | Comparative Example 2 |
|---|---|---|---|---|---|---|---|
| Heating of bar | | | | | | | |
| Heating temperature | 950 °C | 935 °C | 925 °C | 960 °C | 955 °C | 950 °C | **900** °C |
| Heating time /min | 300 | 228 | 294 | 468 | 400 | 300 | 300 |

| Pre-forging | | | | | | | |
|---|---|---|---|---|---|---|---|
| Heating Temperature | 950 °C | 935 °C | 925 °C | 960 °C | 955 °C | 950 °C | **400** °C |
| Strain rate /s⁻¹ | 0.010 | 0.009 | 0.010 | 0.008 | 0.006 | 0.010 | 0.100 |
| Deformation | 65% | 64% | 60% | 68% | 70% | 65% | 65% |
| Cooling rate/ °C/min | 5 | 7.5 | 6 | 7 | 8 | - | 2 |
| Cooling mode | Water cooling | Water cooling | Water cooling | Water cooling | Water cooling | **Air cooling** | Water cooling |

| Intermediate blank | | | | | | | |
|---|---|---|---|---|---|---|---|
| Heating Temperature | 950 °C | 935 °C | 925 °C | 960 °C | 955 °C | 950 °C | **900** °C |
| Heating time /min | 300 | 228 | 294 | 468 | 400 | 300 | 300 |

| Final-forging | | | | | | | |
|---|---|---|---|---|---|---|---|
| Heating temperature /°C | 950 | 935 | 925 | 960 | 955 | 950 | **500** |
| Strain rate /s⁻¹ | 0.005 | 0.004 | 0.004 | 0.003 | 0.004 | 0.005 | **0.050** |
| Deformation /% | 65 | 64 | 60 | 68 | 70 | 65 | 65 |
| Cooling rate /°C/min | 6 | 5 | 7.5 | 8 | 7 | - | **2** |
| Cooling mode | Water cooling | Water cooling | Water cooling | Water cooling | Water cooling | **Air cooling** | Water cooling |

| Solid solution treatment | | | | | | | |
|---|---|---|---|---|---|---|---|
| Temperature /°C | 950 | 935 | 925 | 960 | 955 | 950 | **900** |
| Time /h | 2 h | 1.6 h | 1.8 h | 1.2 h | 1.4 h | 2 h | 2 h |
| Cooling rate /°C/min | 5 | 7 | 6.5 | 8 | 6 | 5 | **2** |
| Cooling mode | Water cooling | Water cooling | Water cooling | Water cooling | Water cooling | Water cooling | Water cooling |

| Aging treatment | | | | | | | |
|---|---|---|---|---|---|---|---|
| Temperature /°C | 720 | 680 | 550 | 800 | 730 | 720 | 720 |
| Time /h | 2 h | 4 h | 6 h | 8 h | 10 h | 2 h | 2 h |

**Table 3**

| | Test piece | Room temperature stretch | | | | Room temperature shock Ak (J) | Brinell hardness HB(d) mm |
|---|---|---|---|---|---|---|---|
| | | Tensile strength Rm (MPa) | Yield strength RP0.2 (MPa) | Elongation rate A (%) | Section shrinkage Z (%) | | |
| Example 1 | Disc | 998 | 952 | 17 | 45 | 34 | 3.45 |
| | Blade | 1003 | 964 | 15 | 41 | 32.5 | 3.39 |
| Example 2 | Disc | 997 | 965 | 16 | 43 | 35 | 3.48 |
| | Blade | 993 | 959 | 15 | 40 | 33 | 3.38 |
| Example 3 | Disc | 1008 | 964 | 18 | 42 | 33 | 3.39 |
| | Blade | 1025 | 970 | 15 | 40 | 35 | 3.37 |
| Example 4 | Disc | 1012 | 962 | 18 | 45 | 35 | 3.46 |
| | Blade | 1025 | 971 | 18 | 43 | 34 | 3.44 |
| Example 5 | Disc | 1016 | 954 | 17 | 43 | 34 | 3.39 |
| | Blade | 999 | 966 | 19 | 42 | 36 | 3.45 |
| Comparative Example 1 | Disc | 926 | 851 | 20 | 46 | 33 | 3.52 |
| | Blade | 942 | 874 | 17 | 42 | 35 | 3.50 |
| Comparative Example 2 | Disc | 1020 | 978 | 12 | 32 | 24 | 3.39 |
| | Blade | 1025 | 986 | 11 | 30 | 23 | 3.37 |

**Table 4**

| | Test piece | High temperature stretch at 400 °C | | |
|---|---|---|---|---|
| | | Tensile strength Rm (MPa) | Elongation rate A (%) | Section shrinkage Z (%) |
| Example 1 | Disc | 689 | 20 | 61 |
| | Blade | 708 | 19 | 58 |
| Example 2 | Disc | 662 | 21 | 62 |
| | Blade | 670 | 19 | 60 |
| Example 3 | Disc | 695 | 20 | 57 |
| | Blade | 689 | 22 | 63 |
| Example 4 | Disc | 671 | 20 | 61 |
| | Blade | 682 | 22 | 58 |
| Example 5 | Disc | 688 | 18 | 57 |
| | Blade | 681 | 23 | 59 |
| Comparative Example 1 | Disc | 615 | 20 | 58 |
| | Blade | 621 | 20 | 59 |
| Comparative Example 2 | Disc | 680 | 16 | 48 |
| | Blade | 674 | 14 | 47 |

## Claims

1. An isothermal near-net forming method for a TC4 titanium alloy aeroengine integral bladed disc, comprising:
1) coating a surface of a TC4 titanium alloy bar with a glass lubricant, and heating a coated TC4 titanium alloy bar to a temperature of T_{β}-(30-80) °C within a heating time T1, wherein T1= D×(0.6-0.9), T1 is in a unit of minute; and D represents a diameter of the TC4 titanium alloy bar and is in a unit of mm;
2) coating a pre-forging die with a layer of the glass lubricant and heating to a temperature of T_{β}-(30-80) °C, and maintaining at the temperature;
3) loading a resulting TC4 titanium alloy bar into a resulting pre-forging die, and forging into a TC4 titanium alloy intermediate blank of a required shape through one isothermal forging by using a hydraulic press, and water-cooling the TC4 titanium alloy intermediate blank after forging to room temperature at a cooling rate of 5-8 °C/min, wherein a strain rate for each isothermal forging is ≤ 0.01 s⁻¹, and a deformation for each isothermal forging is controlled at 60-70%;
4) heating a resulting TC4 titanium alloy intermediate blank to a temperature of T_{β}-(30-80) °C within a heating time T2, wherein T2 = H×(0.6-0.9), T2 is in a unit of minute; H represents a thickness of the TC4 titanium alloy intermediate blank and is in a unit of mm;
5) coating a final-forging forming die with the glass lubricant and heating to a temperature of T_{β}-(30-80) °C, and maintaining at the temperature;
6) loading a resulting TC4 titanium alloy intermediate blank into a resulting final-forging forming die, press-forming the resulting TC4 titanium alloy intermediate blank into a TC4 titanium alloy integral bladed disc forging through one isothermal forging by using a hydraulic press, and water-cooling the TC4 titanium alloy integral bladed disc forging after forging to room temperature at a cooling rate of 5-8 °C/min, wherein a strain rate for each isothermal forging is ≤ 0.005 s⁻¹, and a deformation for each isothermal forging is controlled at 60-70%;
7) subjecting a resulting TC4 titanium alloy integral bladed disc forging to a solid solution treatment at a temperature of T_{β}-(30-80) °C for 1-2 hours, and then water-cooling to room temperature at a cooling rate of 5-8 °C/min; and
8) subjecting an obtained TC4 titanium alloy integral bladed disc forging to an aging treatment, and air-cooling to room temperature.

2. The method as claimed in claim 1, further comprising: step 9), subjecting a resulting TC4 titanium alloy integral bladed disc forging to finishing, wherein a unilateral machining allowance from the TC4 titanium alloy integral bladed disc forging to a rough-machined blank is in a range of 3-4 mm.

3. The method as claimed in claim 1, wherein in step 3), the resulting TC4 titanium alloy bar after heating is loaded into the resulting pre-forging die within 30 seconds.

4. The method as claimed in claim 1 or 3, wherein in step 3), the TC4 titanium alloy intermediate blank is water-cooled within 30 seconds after pre-forging.

5. The method as claimed in claim 1, wherein in step 6), the resulting TC4 titanium alloy intermediate blank after heating is loaded into the resulting final-forging forming die maintained at the temperature within 30 seconds.

6. The method as claimed in claim 1 or 5, wherein in step 6), the TC4 titanium alloy integral bladed disc forging is water-cooled within 30 seconds after final-forging.

7. The method as claimed in claim 1, wherein in step 7), the resulting TC4 titanium alloy integral bladed disc forging is water-cooled within 30 seconds after the solid solution treatment.

8. The method as claimed in claim 1, wherein in step 8), the aging treatment is conducted at a temperature of 550-800 °C for 2-10 hours, and a resulting TC4 titanium alloy integral bladed disc forging after the aging treatment is then air-cooled to room temperature.

9. A TC4 titanium alloy aeroengine integral bladed disc prepared by the method as claimed in any one of claims 1-8, wherein the TC4 titanium alloy aeroengine integral bladed disc has a diameter of 800-1500 mm and a thickness of 200-350 mm;
the TC4 titanium alloy aeroengine integral bladed disc at any part exhibits room-temperature tensile properties of: a tensile strength ≥ 960 MPa, a yield strength ≥ 880 MPa, an elongation rate ≥ 12.0%, and a section shrinkage ≥ 25%;
the TC4 titanium alloy aeroengine integral bladed disc at any part exhibits high-temperature tensile properties at 400 °C of: a tensile strength ≥ 650 MPa, an elongation rate ≥ 15%, and a section shrinkage ≥ 50%; and
the TC4 titanium alloy aeroengine integral bladed disc exhibits a room-temperature impact work ≥ 28 J, and a Brinell hardness presented by an indentation diameter ≥ 3.35 mm.

10. The TC4 titanium alloy aeroengine integral bladed disc as claimed in claim 9, wherein the TC4 titanium alloy aeroengine integral bladed disc has a microstructure of an (α+β) two-phase zone structure, mainly composed of a β transformation structure matrix and an equiaxed primary α phase distributed thereon, wherein
a primary α phase has a content of 40-50% and a size ≤ 20 µm.
